Europäisches Patentamt

European Patent Office

Office européen des brevets

(11) Veröffentlichungsnummer: **0 275 518 B1**

# (12) EUROPÄISCHE PATENTSCHRIFT

(45) Veröffentlichungstag der Patentschrift: **29.01.92**

(21) Anmeldenummer: **87118897.5**

(22) Anmeldetag: **19.12.87**

(51) Int. Cl.⁵: **C08L 77/00**, C08L 23/08, C08L 33/08, C08L 33/10, C08L 33/02

(54) Thermoplastische Formmassen auf der Basis von Polyamiden und Ethylencopolymerisaten.

(30) Priorität: **30.12.86 DE 3644668**

(43) Veröffentlichungstag der Anmeldung:
**27.07.88 Patentblatt  88/30**

(45) Bekanntmachung des Hinweises auf die
Patenterteilung:
**29.01.92 Patentblatt  92/05**

(84) Benannte Vertragsstaaten:
**BE DE FR GB NL**

(56) Entgegenhaltungen:
**EP-A- 0 083 014      EP-A- 0 096 264
EP-A- 0 125 483      EP-A- 0 176 978
WO-A-86/06397      DE-A- 3 312 936**

(73) Patentinhaber: **BASF Aktiengesellschaft
Carl-Bosch-Strasse 38
W-6700 Ludwigshafen(DE)**

(72) Erfinder: **Plachetta, Christoph, Dr.
Albert-Einstein-Allee 12
W-6703 Limburgerhof(DE)**
Erfinder: **Reimann, Horst, Dr.
Adelheidstrasse 26
W-6520 Worms 1(DE)**
Erfinder: **Theysohn, Rainer, Dr.
Am Bruch 38
W-6710 Frankenthal(DE)**
Erfinder: **Mietzner, Franz Georg, Dr.
Neuhausener Weg 3
W-6700 Ludwigshafen(DE)**

EP 0 275 518 B1

**Beschreibung**

Die vorliegende Erfindung betrifft thermoplastische Formmassen auf der Basis von Polyamiden und Ethylencopolymerisaten, enthaltend als wesentliche Komponenten

(A) 40 bis 95 Gew.-% eines Polyamids, und

(B) 5 bis 60 Gew.-% eines unvernetzten Copolymerisates auf der Basis von

a) 55 bis 79,5 Gew.-% Ethylen,

b) 20 bis 40 Gew.-% zumindest eines primären oder sekundären $C_2$-$C_8$-Alkylesters der Acrylsäure oder Methacrylsäure,

c) 0,49 bis 8 Gew.-% eines monosäurefunktionellen oder latent monosäurefunktionellen Monomeren oder eines Epoxygruppen enthaltenden Monomeren einer ethylenisch ungesättigten Monocarbonsäure, und

d) 0,01 bis 2 Gew.-% einer ethylenisch ungesättigten Dicarbonsäure oder eines Anhydrids derselben.

Darüber hinaus betrifft die Erfindung die Verwendung derartiger Formmassen zur Herstellung von Formkörpern und Formkörper, die unter Verwendung von derartigen Formmassen als wesentliche Komponenten erhältlich sind.

Die mechanischen Eigenschaften von Polymeren hängen häufig von der Art ihrer Vorbehandlung ab. So ist die Schlagzähigkeit von Formkörpern aus Polyamiden erheblich vom Wassergehalt der Formkörper abhängig.

In wasserfreiem Zustand sind besonders die aus leichtfließenden, vorzugsweise hochkristallinen Polyamiden mit mittlerem Molekulargewicht hergestellten Formkörper relativ empfindlich gegen Schlagbeanspruchung. Es besteht daher ein Bedarf nach rasch verarbeitbaren, leicht fließenden Polyamidkunststoffen, aus denen sich insbesondere Formkörper herstellen lassen, die in trockenem Zustand eine erhöhte Schlagzähigkeit aufweisen. Besonders sind solche Polyamide von Interesse, die gleichzeitig eine hohe Zugfestigkeit, eine hohe Wärmestandfestigkeit, eine gute Lösungsmittelbeständigkeit, eine leichte Verarbeitbarkeit und eine hohe Schlagzähigkeit und eine gute Flexibilität aufweisen.

Zur Verbesserung der Schlagzähigkeit und Flexibilität von Polyamiden ist es bekannt, niedermolekulare Weichmacher in Polyamide einzumischen. Dies führt aber nicht zu zufriedenstellenden Lösungen. Der größte Teil der für Kunststoffe geeigneten Weichmacher ist mit Polyamiden nicht ausreichend verträglich und entmischt sich beim Verarbeiten, oder die Weichmacher neigen zum Ausschwitzen aus dem Kunststoff. Weichmacher, die mit Polyamiden echte Lösungen bilden, haben meist negative Auswirkungen auf die mechanischen Eigenschaften der Polyamide. Stark polare Stoffe mit niedrigem Molekulargewicht wie Wasser oder Dimethylformamid bewirken zwar eine gute Weichmachung, können jedoch erst nach der Herstellung der Formkörper in diese eingearbeitet werden, weil sonst bei der Verarbeitung des vorbehandelten Polyamidgranulats wegen der relativ niedrigen Siedepunkte dieser Weichmacher blasenhaltige Formkörper entstehen würden. Außerdem entweichen derartige Weichmacher wegen ihres hohen Dampfdrucks wieder aus dem behandelten Polyamidformkörper.

Aus der DE-A 1 138 922 ist bekannt, die Schlagzähigkeit von Polyamiden durch Zumischen von polymeren Stoffen wie Polyethylen und Copolymerisaten aus Vinylacetat und Ethylen zu verbessern. Infolge einer bei der Verarbeitung auftretenden teilweisen Entmischung neigen aus derartigen Formmassen hergestellte Formkörper zum Weißbruch.

Auch die Einmischung von Polyethylenen, die saure Gruppen enthalten, z.B. Copolymerisaten aus Ethylen und ungesättigten Säuren oder mit ungesättigten Säuren gepropftes Ethylen, können zur Verbesserung der Schlagzähigkeit in Polyamide eingemischt werden. Derartige Mischungen sind zwar feindisperser und zeigen bei Beanspruchungen einen geringeren Weißbruch als die oben beschriebenen Mischungen, besitzen jedoch abgesehen von der etwas verbesserten Zähigkeit erheblich schlechtere mechanische Eigenschaften, insbesondere hinsichtlich Elastizitätsmodul, Zugfestigkeit, Härte und Steifigkeit als die Polyamide selbst.

Gemäß der US-A-3 742 916 und der DE-B-1 669 702 wird durch Verwendung von Copolymerisaten aus Ethylen und tertiären Acrylsäure- oder (Meth)acrylsäureestern und deren Abmischung mit Polyamiden eine gewissen Verbesserung erzielt. Diese Produkte sind jedoch hinsichtlich der thermischen Stabilität unbefriedigend. Gleiches gilt für die Kerbschlagzähigkeit im spritzfrischen Zustand. Der gleiche Nachteil haftet auch den aus der US-A-3 845 163, FR-A-1 504 113 und der DE-A33 12 936 bekannten Mischungen an, die wegen der dort zum Teil als Salz vorliegenden (Meth)acrylsäure noch zusätzliche Nachteile aufweisen. So fallen bekanntlich die Werte der Kriechstromfestigkeit bei Anwesenheit von Metallen sehr stark ab, so daß ein Einsatz derartiger Produkte auf dem Elektrosektor kaum möglich ist. Darüber hinaus sind die meisten der zur Neutralisation verwendeten Metallionen physiologisch bedenklich. So dürften derartige Produkte weder auf dem Sektor der Lebensmittelverpackung noch als Kinderspielzeug eingesetzt werden.

Auch Copolymerisate aus Ethylen, Acrylsäure und/oder (Meth)acrylsäure sowie Acrylaten und/oder (Meth)acrylaten als elastifizierende Komponenten wurden Polyamiden bereits zugesetzt (vgl. DE-A 1 241 606). Dadurch wird eine Verbesserung der Schlagzähigkeit der Polyamide erreicht, die jedoch für einige Anwendungsbereiche noch nicht befriedigt.

In der DE-A-27 13 537 werden hochschlagzähe Produkte beschrieben, bei denen tertiäre Copolymerisate aus Ethylen, 4 Gew.-% Acrylsäure und Ethyl-oder tert.-Butylacrylat als schlagzäh modifzierende Komponenten in Polyamid eingemischt werden. Das eingesetzte Polyamid muß eine relative Viskosität von mindestens 3,5 aufweisen. Wegen ihres ungenügenden Fließverhaltens sind derartige Produkte nur sehr schwer verarbeitbar.

Schließlich werden in der EP-A 96264 Mischungen aus Polyamiden und Terpolymeren aus Ethylen, n-Butylacrylat und einem säurefunktionellen oder latent säurefunktionellen Monomeren als elastifizierende Komponente beschrieben. Die Reproduzierbarkeit der Schlagzähigkeit bei tiefen Temperaturen, insbesondere an komplizierteren Formkörpern, liefert jedoch noch keine vollständig befriedigende Ergebnisse.

Der vorliegenden Erfindung lag daher die Aufgabe zugrunde, thermoplastische Formmassen zur Verfügung zu stellen, die ein gutes Gesamtspektrum der mechanischen Eigenschaften und insbesondere eine gute Reproduzierbarkeit der Schlagzähigkeitseigenschaften auch bei tiefen Temperaturen, insbesondere bei Messungen an aus den Formmassen hergestellten Formkörpern zeigen.

Diese Aufgabe wird erfindungsgemäß durch die eingangs definierten thermoplastischen Formmassen gelöst.

Bevorzugte Massen dieser Art sind den Unteransprüchen zu entnehmen.

Die als Komponente A) in den Massen enthaltende Polyamide sind an sich bekannt und umfassen die halbkristallinen und amorphen Harze mit Molekulargewichten (Gewichtsmittelwerten) von mindestens 5000, die gewöhnlich als Nylon bezeichnet werden. Solche Polyamide sind z.B. in den amerikanischen Patentschriften 2 071 250, 2 071 251, 2 130 523, 2 130 948, 2 241 322, 2 312 966, 2 512 606 und 3 393 210 beschrieben.

Die Polyamide können z.B. durch Kondensation äquimolarer Mengen einer gesättigten oder einer aromatischen Dicarbonsäure mit 4 bis 12 Kohlenstoffatomen, mit einem Diamin, welches bis 14 Kohlenstoffatome aufweist, hergestellt werden, oder durch Kondensation von $\omega$-Aminocarbonsäuren oder Polyaddition von Lactamen. Beispiele für
Polyamide sind Polyhexamethylenadipinsäureamid (Nylon 66),
Polyhexamethylenazelainsäureamid (Nylon 69),
Polyhexamethylensebacinsäureamid (Nylon 610),
Polyhexamethylendodecandisäureamid (Nylon 612), die durch Ringöffnung von Lactamen erhaltenen Polyamide, wie Polycaprolactam, Polylaurinsäurelactam, ferner Poly-11-aminoundecansäure und ein Polyamid aus Di(p-aminocyclohexyl)-methan- und Dodecandisäure. Es ist auch möglich, gemäß der Erfindung Polyamide zu verwenden, die durch Copolykondensation von zwei oder mehr der obengenannten Polymeren oder ihrer Komponenten hergestellt worden sind, z.B. ein Copolymeres aus Adipinsäure, Isophthalsäure oder Terephthalsäure und Hexamethylendiamin oder Copolymere aus Caprolactam, Terephthalsäure und Hexamethylendiamin. Vorzugsweise sind die Polyamide linear und haben Schmelzpunkte von mehr als 200˚ C.

Bevorzugte Polyamide sind Polyhexamethylenadipinsäureamid, Polyhexamethylensebacinsäureamid und Polycaprolactam. Die Polyamide weisen im allgemeinen eine relative Viskosität von 2,5 bis 5 auf, bestimmt an einer 1 gew.-%igen Lösung in 96 %iger Schwefelsäure bei 23˚ C, was einem Molekulargewicht von etwa 15 000 bis 45 000 entspricht. Polyamide mit einer relativen Viskosität von 2,5 bis 3,5, insbesondere 2,6 bis 3,4 werden bevorzugt verwendet.

Der Anteil der Polyamide A) an den erfindungsgemäßen Formmassen beträgt 40 bis 95, vorzugsweise 50 bis 90 und insbesondere 55 bis 85 Gew.-%.

Die erfindungsgemäßen Copolymerisate B) sind unvernetzt, d.h. sie sind zu mindestens 90 % in heißen Lösungsmitteln wie Toluol, Methylbenzol oder Tetrachlorethylen löslich.

Die Copolymerisate B) leiten sich ab von
a) 55 bis 79,5 Gew.-% Ethylen,
b) 20 bis 40 Gew.-%, vorzugsweise 25 bis 38 und insbesondere 30 bis 36 Gew.-% mindestens eines primären oder sekundären Alkylesters der Acrylsäure oder Methacrylsäure mit 2 bis 8 C-Atomen im Alkylrest, vorzugsweise n-Butylacrylat,
c) 0,49 bis 8 Gew.-% eines Säuregruppen enthaltenden Monomeren, vorzugsweise Methacrylsäure oder Acrylsäure, oder eines Monomeren mit verkappten Säuregruppen, welches unter den Konfektionierbedingungen oder den Polymerisationsbedingungen Säuregruppen bildet, wie tert.-Butylacrylat oder tert.-Butylmethacrylat oder eines Monomeren mit Epoxygruppen z.B. Glycidylacrylat und/oder Glycidylmethacrylat und

d) 0,01 bis 2 Gew.-% einer ethylenisch ungesättigten Dicarbonsäure und/oder eines Anhydrids derselben.

Als Beispiele für Komponenten d) seien nur Maleinsäure, Fumarsäure und Maleinsäureanhydrid genannt.

Die bevorzugten Copolymerisate weisen einen Schmelzbereich (Schmelzpunkt) zwischen 40 und 100°C auf und besitzen eine Glasübergangstemperatur von unter -20°C, insbesondere unter -50°C. Besonders vorteilhaft sind Copolymerisate, die darüber hinaus einen Schubmodul (nach DIN 53 445) bei -20°C von unter 100, insbesondere unter 50 $Nmm^{-2}$, bei 0°C von unter 50, insbesondere unter 20 $Nmm^{-2}$ und bei -20°C von unter 20, insbesondere unter 10 $Nmm^{-2}$ aufweisen.

Die Copolymerisate B) sind im allgemeinen hochmolekular und besitzen einen Schmelzindex nach DIN 53 735 (gemessen bei 190°C und 2,16 kg Belastung) im Bereich von 2 bis 20.

Der Anteil des Copolymerisats B) an den erfindungsgemäßen Formmassen beträgt 5 bis 60, vorzugsweise 5 bis 40 und insbesondere 8 bis 25 Gew.-%. Verfahren zur Herstellung derartiger Copolymerisate sind an sich bekannt, so daß sich hier nähere Angaben erübrigen. Bevorzugt erfolgt die Herstellung in an sich bekannter Weise durch Polymerisation der Komponenten bei erhöhter Temperatur unter hohem Ethylendruck.

Neben den Komponenten A) und B) können die erfindungsgemäßen thermoplastischen Formmassen übliche Zusatzstoffe und Verarbeitungshilfsmittel wie Stabilisatoren, Oxidationsverzögerer, Mittel gegen Wärmezersetzung und Zersetzung durch ultraviolettes Licht, Gleit-und Entformungsmittel, Färbemittel wie Farbstoffe und Pigmente, faser- und pulverförmige Füll- und Verstärkungsmittel, Keimbildungsmittel, Weichmacher usw. enthalten, deren Anteil in der Regel nicht mehr als 50 Gew.-%, bezogen auf das Gesamtgewicht der Formmassen beträgt.

Die Stabilisatoren können den thermoplastischen Formmassen in jedem Stadium der Herstellung zugesetzt werden, werden jedoch vorzugsweise möglichst früh zugegeben, um zu verhindern, daß die Zersetzung bereits beginnt, bevor der Stabilisator eingearbeitet ist. Als Beispiele für Oxidationsverzögerer und Wärmestabilisatoren sind Halogenide von Metallen der Gruppe I des periodischen Systems, z.B. Natrium-, Kalium- und/oder Lithiumhalogenide, ggf. in Verbindung mit Kupfer-(I)-Halogeniden, z.B. Chloriden, Bromiden, Jodiden, sterisch gehinderte Phenole, Hydrochinone, verschiedene substituierte Vertreter dieser Gruppen und deren Mischungen in Konzentrationen bis zu 1 Gew.-%, bezogen auf das Gewicht der thermoplastischen Formmasse genannt.

Als UV-Stabilisatoren, die im allgemeinen in Mengen bis zu 2 Gew.-%, bezogen auf die Formmasse, verwendet werden, seien verschiedene substituierte Resorcine, Salicylate, Benzotriazole und Benzophenone genannt.

Gleit- und Entformungsmittel werden in der Regel in Mengen von max. 1 Gew.-%, bezogen auf das Gesamtgewicht, der Formmasse zugesetzt. Beispiele hierfür sind Stearinsäure, Stearinalkohol und Stearinsäureamide.

Weiterhin können organische Farbstoffe wie Nigrosin, Pigmente wie Titandioxid, Cadmiumsulfid, Cadmiumselenid, Phthalocyanine, Ultramarinblau und Ruß als Farbstoffe zugesetzt werden, sowie faser- und pulverförmige Füllstoffe und Verstärkungsmittel. Beispiele für letztere sind Kohlenstoffasern, Glasfasern, amorphe Kieselsäure, Asbest, Calciumsilicat, Aluminiumsilicat, Magnesiumcarbonat, Kaolin, Kreide, gepulverter Quarz, Glimmer und Feldspat. Der Anteil derartiger Füll- und Farbstoffe beträgt im allgemeinen bis zu 50 Gew.-%, bezogen auf das Gesamtgewicht der Formmassen.

Als Keimbildungsmittel können z.B. Talkum, Calciumfluorid, Natriumphenylphosphinat, Aluminiumoxid und feinteiliges Polytetrafluorethylen eingesetzt werden.

Als Beispiele für Weichmacher seien Phthalsäuredioctylester, Phthalsäuredibenzylester, Phthalsäurebutylbenzylester, Kohlenwasserstofföle, N-(n-Butyl)benzolsulfonamid und o- und p-Tolylethylsulfonamid genannt.

Die Herstellung der erfindungsgemäßen Formmassen kann nach an sich bekannten Verfahren erfolgen, z.B. durch Abmischen in der Schmelze bei erhöhten Temperaturen. Zweckmäßigerweise verwendet man hierzu Extruder, z.B. Einschnecken- oder Zweischneckenextruder oder andere herkömmliche Plastifizierungsvorrichtungen, wie Brabender-Mühlen oder Banbury-Mühlen. Die Herstellung kann aber auch durch gemeinsames Ausfällen der Komponenten aus einer Lösung oder durch Mischen oder Trockenmischen der Komponenten und anschließendes Schmelzstrangpressen des trockenen Gemisches hergestellt werden.

Es hat sich als vorteilhaft herausgestellt, wenn das Ethylencopolymerisat B) im Polyamid in Form von Einzelteilchen vorliegt, welche eine Größe von unter 3 $\mu$m, bevorzugt unter 1 $\mu$m aufweisen.

Die erfindungsgemäßen Formmassen eignen sich für die Verarbeitung durch Spritzguß oder Extrusion, insbesondere zur Herstellung von hochbeanspruchten, thermostabilen schlagzähen Formteilen für technische Zwecke aller Art.

Beispiel 1

Zur Herstellung von erfindungsgemäßen Formmassen und Formmassen nach dem Stand der Technik wurden die in der Tabelle 1 angegebenen Anteile an Polyamiden und Ethylen-Copolymeren auf einem Zweischneckenextruder bei 280°C abgemischt und in ein Wasserbad extrudiert. Nach Granulierung und Trocknung wurden die Mischungen auf einer Spritzgußmaschine zu Prüfkörpern verspritzt und diese in trockenem Zustand geprüft.

Die Werte der Schädigungs- bzw. Durchstoßarbeit nach DIN 53 443 (multiaxiale Schlagzähigkeit) sowie die Schädigungsarbeit am Testkästchen ($W_{50}$) in Anlehnung an DIN 53 443 Teil 1 sind in der Tabelle 2 aufgeführt.

Tabelle 1

| Bsp.-Nr. | Polyamid | | | Ethylencopolymerisat | | |
|---|---|---|---|---|---|---|
| | Art | $\nu_{rel}$ | Menge (Gew.-%) | Zusammensetzung (in Gew.-%) | Menge (Gew.-%) | MFI (190° C; 2,16 kg) |
| 1 V | Polycaprolactam | 3,3 | 100 | - | - | - |
| 2 V | " | 3,3 | 80 | E/n-BA/AS (60/35/5) | 20 | 10,6 |
| 3 V | " | 3,3 | 80 | E/n-BA/MSA (64,3/35/0,7) | 20 | 10,3 |
| 4 | " | 3,3 | 80 | E/n-BA/AS/MSA (59,8/35/4,5/0,7) | 20 | 11,0 |
| 5 V | Polyhexanmethylen-adipinsäureamid | 2,6 | 100 | - | - | - |
| 6 V | " | 2,6 | 80 | E/n-BA/AS (60/35/5) | 20 | 10,6 |
| 7 V | " | 2,6 | 80 | E/n-BA/MSA (64,3/35/0,7) | 20 | 10,3 |
| 8 | " | 2,6 | 80 | E/n-BA/AS/MSA (59,8/35/4,5/0,7) | 20 | 11,0 |

## Tabelle 2

Meßergebnisse

| Bsp.-Nr. | $W_s$ 1) [Nm] (-40°C) | $W_{ges}$ 2) [Nm] (-40°C) | % Sprödbrüche | $W_{50}$ 3) [Nm] (-40°C) |
|---|---|---|---|---|
| 1 V | 1 | 1 | 100 | 10 |
| 2 V | 25 | 50 | 40 | 37 |
| 3 V | 33 | 55 | 0 | 91 |
| 4 | 39 | 70 | 0 | 120 |
| 5 V | nicht meßbar | nicht meßbar | 100 | 6 |
| 6 V | 22 | 28 | 80 | 17 |
| 7 V | 32 | 45 | 60 | 35 |
| 8 | 31 | 52 | 0 | 110 |

V = Vergleichsversuch
1) = Schädigungsarbeit an der Rundscheibe (2 mm) (DIN 53 443)
2) = Durchstoßarbeit an der Rundscheibe (2 mm) (DIN 53 443)
3) = Schädigungsarbeit am Testkästchen (vgl. Broschüre "Ultramid der BASF AG, 1985, S. 14, Bild 7)

Die Ergebnisse zeigen, daß sich die erfindungsgemäßen thermoplastischen Formmassen durch eine sehr gute Reproduzierbarkeit der Schlagzähigkeit, auch bei tiefen Temperaturen und ein sehr hohes Niveau der Schädigungsarbeit am Testkästchen bei -40°C auszeichnen. Dies gilt insbesondere auch gegenüber den aus der EP-A-92 664 bekannten Formmassen.

## Patentansprüche

1. Thermoplastische Formmassen, enthaltend als wesentliche Komponenten

    (A) 40 bis 95 Gew.-% eines Polyamids, und
    (B) 5 bis 60 Gew.-% eines unvernetzten Copolymerisates auf der Basis von
        a) 55 bis 79,5 Gew.-% Ethylen,
        b) 20 bis 40 Gew.-% zumindest eines primären oder sekundären $C_2$-$C_8$-Alkylesters der Acrylsäure oder Methacrylsäure,
        c) 0,49 bis 8 Gew.-% eines monosäurefunktionellen oder latent monosäurefunktionellen Monomeren oder eines Epoxygruppen enthaltenden Monomeren einer ethylenisch ungesättigten Monocarbonsäure, und

d) 0,01 bis 2 Gew.-% einer ethylenisch ungesättigten Dicarbonsäure und/oder eines Anhydrids derselben.

**2.** Thermoplastische Formmassen nach Anspruch 1, dadurch gekennzeichnet, daß die Komponente b) n-Butylacrylat ist.

**3.** Thermoplastische Formmassen nach den Ansprüchen 1 und 2, dadurch gekennzeichnet, daß die Komponente c) Acrylsäure, Methacrylsäure, t-Butylacrylat, Glycidylacrylat oder Glycidylmethacrylat oder deren Mischungen ist.

**4.** Thermoplastische Formmassen nach den Ansprüchen 1 bis 3, dadurch gekennzeichnet, daß die Komponente d) Maleinsäureanhydrid, Maleinsäure, Fumarsäure oder deren Mischungen ist.

**5.** Thermoplastische Formmassen nach den Ansprüchen 1 bis 4, dadurch gekennzeichnet, daß die Komponente B) einen Schmelzbereich zwischen 40 und 100°C und eine Glasübergangstemperatur unterhalb -20°C aufweist.

**6.** Verwendung der thermoplastischen Formmassen gemäß den Ansprüchen 1 bis 5 zur Herstellung von Formkörpern.

**7.** Formkörper, erhältlich unter Verwendung von thermoplastischen Formmassen gemäß den Ansprüchen 1 bis 5 als wesentliche Komponente.

**Claims**

**1.** A thermoplastic molding material containing, as essential components,
(A) from 40 to 95% by weight of a polyamide and
(B) from 5 to 60% by weight of a noncrosslinked copolymer based on
a) from 55 to 79.5% by weight of ethylene,
b) from 20 to 40% by weight of one or more primary or secondary $C_2$-$C_8$-alkyl esters of acrylic acid or methacrylic acid,
c) from 0.49 to 8% by weight of a monomer having a monoacid-functional group or a latent monoacid-functional group, or of an epoxy-containing monomer of an ethylenically unsaturated monocarboxylic acid, and
d) from 0.01 to 2% by weight of an ethylenically unsaturated dicarboxylic acid or of an anhydride of such an acid.

**2.** A thermoplastic molding material as claimed in claim 1, wherein component b) is n-butyl acrylate.

**3.** A thermoplastic molding material as claimed in claim 1 or 2, wherein component c) is acrylic acid, methacrylic acid, tert-butyl acrylate, glycidyl acrylate or glycidyl methacrylate or a mixture of these.

**4.** A thermoplastic molding material as claimed in any of claims 1 to 3, wherein component d) is maleic anhydride, maleic acid, fumaric acid or a mixture of these.

**5.** A thermoplastic molding material as claimed in any of claims 1 to 4, wherein component B) has a melting range of from 40 to 100°C and a glass transition temperature of less than -20°C.

**6.** Use of a thermoplastic molding material as claimed in any of claims 1 to 5 for producing moldings.

**7.** Moldings obtainable using a thermoplastic molding material as claimed in any of claims 1 to 5 as the essential component.

**Revendications**

**1.** Masses à mouler thermoplastiques, contenant comme composants essentiels :
A) 40 à 95% en poids d'un polyamide, et
B) 5 à 60% en poids d'un copolymère non réticulé à base de

8

a) 55 à 79,5% en poids d'éthylène,

b) 20 à 40% en poids d'au moins un ester alkylique en $C_2$-$C_8$ primaire ou secondaire de l'acide acrylique ou de l'acide méthacrylique,

c) 0,49 à 8% en poids d'un monomère à fonction monocarboxylique ou à fonction monocarboxylique latente ou d'un monomère contenant des groupements époxy dérivé d'un acide monocarboxylique à insaturation éthylénique, et

d) 0,01 à 2% en poids d'un acide dicarboxylique à insaturation éthylénique et/ou d'un de ses anhydrides.

2. Masses à mouler thermoplastiques selon la revendication 1, caractérisées en ce que le composant b) est l'acrylate de n-butyle.

3. Masses à mouler thermoplastiques selon les revendications 1 et 2, caractérisées en ce que le composant c) est l'acide acrylique, l'acide méthacrylique, l'acrylate de t-butyle, l'acrylate de glycidyle ou le méthacrylate de glycidyle ou leurs mélanges.

4. Masses à mouler thermoplastiques selon les revendications 1 à 3, caractérisées en ce que le composé a) est l'anhydride maléique, l'acide maléique, l'acide fumarique ou leurs mélanges.

5. Masses à mouler thermoplastiques selon les revendications 1 à 4, caractérisées en ce que le composé B) présente un intervalle de fusion entre 40 et 100°C et une température de transition vitreuse inférieure à -20°C.

6. Utilisation des masses à mouler selon les revendications 1 à 5 pour la préparation d'articles moulés.

7. Articles moulés, obtenus par utilisation de masses à mouler selon les revendications 1 à 5 comme constituant essentiel.